# EUROPEAN PATENT SPECIFICATION

(11) **EP 0 733 230 B1**
(45) Date of publication and mention of the grant of the patent: **01.04.1998**
(21) Application number: 95904442.1
(22) Date of filing: 09.12.1994
(51) Int. Cl.: G03C 5/08, B41M 3/14, B42D 15/10, G03C 8/28, G03C 8/52

(54) **OPAQUE DOCUMENT CONTAINING INTERFERENCE PIGMENTS PROVIDING EASY VERIFICATION AND PROTECTION AGAINST PHOTO-COPYING**
Opakes Dokument, das Interferenzpigmente enthält, die leichtes Verifizieren und Schutz gegen Photokopieren ermöglichen
DOCUMENT OPAQUE CONTENANT DES PIGMENTS D'INTERFERENCE FACILITANT LA VERIFICATION ET ASSURANT UNE PROTECTION ANTICOPIE

(30) Priority: 10.12.1993 EP 93203472
(43) Date of publication of application: 25.09.1996
(73) Proprietor: AGFA-GEVAERT N.V., 2640 Mortsel (BE); NATIONALE BANK VAN BELGIE N.V., 1000 Brussel (BE)
(72) Inventor: VERMEULEN, Leo, B-2640 Mortsel (BE); DE BAETS, Daniel, B-1000 Brussel (BE)
(86) International application number: EP9404095
(87) International publication number: WO9516224

(56) References cited:
- EP-A- 0 317 514
- EP-A- 0 447 692
- EP-A- 0 490 416
- EP-A- 0 588 407
- CA-A- 2 123 783
- FR-A- 2 429 292
- NL-A- 8 901 256
- US-A- 4 151 666
- US-A- 4 428 997

## Description

### 1. Field of the Invention

The present invention relates to opaque security documents that can be verified on their authenticity and are protected against counterfeiting by photo-copying.

### 2. Background of the Invention

Security documents that must be verifiable on their authenticity are e.g. all kinds of identification documents such as passports, visas, identity cards, driver licenses, bank cards, credit cards, security entrance cards, and further value-documents such as banknotes, shares, bonds, certificates, cheques, lottery tickets and all kinds of entrance tickets such as airplane tickets and railroad season-tickets.

Nowadays, by the availability of markedly improved black-and-white and color copiers it becomes more and more easy to copy documents at high quality hardly to distinguish from the originals.

To protect the above mentioned documents against fraudulent alterations and reproduction by photo-copying different techniques are used such as the melt-laminating or glueing thereto of preprinted plastic overlayers; the printing with special inks; the application of coatings or layers for example loaded with magnetic or fluorescent pigments; coloring or metallizing the substrate of the documents; incorporating holograms: applying fine line printing, watermarks, fibers, security threads, light diffraction marks, liquid crystal marks and/or substances called nacreous, iridiscent or interference pigments.

In a particular case disclosed in US-P 4,151,666 light-transmissive pigments serving as diffuse reflectors are applied by printing to form a verification pattern in a laminated identification card (I.D. card). In the specification of the same US-P the use of nacreous pigments in verification patterns has been described. Nacreous pigments, also called pearlescent pigments have light-reflection characteristics that change as a function of the viewing or copying angle. The effect of changing color with viewing angle makes that nacreous pigments represent a simple and convenient matter to built in a verification feature associated with a non-copyable optical property.

### 3. Objects and Summary of the Invention

It is an object of the present invention to provide opaque security documents incorporating a photograph and containing a verification feature that can not be copied by photographic techniques and wherein there is no need for specialized devices or conditions to verify the document on its authenticity.

It is more particularly an object of the present invention to provide opaque security documents containing at least one photograph obtained by means of the silver complex or dye diffusion transfer process in combination with interference pigments applied by coating before the photograph is formed.

It is a special object of the present invention to provide an opaque security document containing a portrait in combination with a plurality of interference pigments of different color for easy verfication by the naked eye of the security document involved.

Other objects and advantages of the present invention will become clear from the further description and examples.

In accordance with the present invention there is provided a document containing a photograph obtained by the silver complex or dye diffusion transfer process in an image receiving layer, characterized in that said document contains light interference pigments uniformly distributed in said image receiving layer, and/or in a layer overlaying or underlying said image receiving layer, said layer(s) being present on an opaque support.

By "opaque support" in the document according to the present invention has to be understood a support having a visible light-blocking capacity of at least 70 %, not excluding supports that have inherently a color or contain colorants, e.g. dyes or pigments.

Said layers containing said uniformly distributed interference pigments may be present at both sides of said opaque support.

### 4. Detailed Description of the Invention

Nacreous or pearlescent pigments being interference pigments were originally named for their simulation of pearly luster.

Interference pigments are in the form of light-reflecting crystal platelets of appropriate thickness to produce color by interference. These pigments exhibit a color play that verges on iridiscence and under a given angle of reflection will allow only the copying of a single color, whereas other colors appear under different angles of reflection, in other words these pigments show another color to the human eye depending on the observation angle.

Very good anticopying results are obtained with synthetic inorganic interference pigments chief among which are titanium dioxide-coated mica or other metal-oxide coated pigments in which the metal oxide has preferably a refractive index comparable with the refractive index of TiO₂, e.g. ZrO₂, Fe₂O₃ or Cr₂O₃.

The platelets of metal oxide coated mica pigments have three layers in such a way that on each of the broad faces of the mica platelets a very thin coating of metal oxide is present.

The more brilliant interference pigments approach metallic luster, an effect that is enhanced by the presence of absorption colorants. TiO₂-mica readily lends itself to incorporation of absorption colorants. Ferric oxide (Fe₂O₃) added to the TiO₂ layer, for example imparts a yellow color which in conjunction with a yellow interference color creates gold. When Fe₂O₃ is used in place of TiO₂ as the oxide coating on mica, these pigments have a yellow-red absorption color because of the inherent color of the Fe₂O₃. They range from bronze to deep copper-red and have a metallic luster.

The preparation of such kind of pigments is described in "Nacreous (Pearlescent) Pigments and Interference Pigments by L.M. Greenstein Henry L. Mattin Laboratories Reprinted from Pigment Handbook, Vol. I, Properties and Economics, Second Edition, Edited by Peter A. Lewis, (1988) by permission of John Wiley & Sons, Inc. The Mearl Corporation, 41 East 42nd Street, New York, N.Y. 100017.

Mica pigments serving as a substrate of the interference coatings are a group of hydrous aluminum silicate minerals with platy morphology and perfect basal (micaceous) cleavage. Examples of suitable micas are e.g. muscovite KAl₂(AlSi₃O₁₀)(OH)₂, paragonite NaAl₂(AlSi₃O₁₀)(OH)₂, phlogopite K(Mg.Fe)(AlSi₃O₁₀)(OH)₂, biotite K(Fe,Mg)(AlSi₃O₁₀)(OH)₂ and lepidolite K(Li.Al)_{2.5-3.0}(Al_{1.0-0.5}Si_{3.0-3.5}O₁₀)(OH)₂ etc..

Details about the application of metal and/or metal oxide coatings on the mica platelets are further given in US-P 3,087,827, 4,434,010 and 5,059,245 and in published EP-A-45 851, EP-A-313 280, DE-A-11 65 182, DE-A-32 37 264, DE-A-38 25 702 and DE-A-36 17 430 and DE-OS 41 41 069.

In a preferred embodiment according to the present invention interference pigments having a composition as described in published German patent application DE-OS 41 41 069 are used. Said interference pigments, called "Glanzpigmente" according to said DE-OS are composed of silicate platelets coated with either :
A) a first layer of highly refractive metal oxide, and
B) a second black layer essentially consisting of metallic iron, molybdenum and/or wolfram, or coated with :
A) a first layer of highly refractive metal oxide, and
B) a second black layer essentially consisting of carbon or metal, and
C) a third layer of highly refractive metal oxide.
By the presence of a semi-transparent carbon layer said platelets have a high chemical resistance. The carbon layer is obtained by thermal decomposition of oxygen-containing hydrocarbon compounds which for each two carbon atoms contain at least one oxygen atom e.g. as in carbohydrates such as sorbitol.
The metal layer B) can be formed in a medium of inert gas from in-gas-phase-decomposable metal compounds, e.g. metal carbonyl compounds, and the metal oxide layers A) and C) are formed by decomposition in gas phase of volatile metal compounds in the presence of oxygen water vapour or mixtures thereof.

The first layer A) consists e.g. of the oxides of titanium, zirconium, tin and/or iron.

Mica platelets double-side coated with one or more metal oxide layers for use as interference pigments are commercially available e.g. under the tradenames IRIODINE (E. Merck, Darmstadt), FLONAC (Kemira Oy, Pori, Finland), MEARLIN (The Mearl Corporation, New York, U.S.A.) and PALIOSECURE (BASF, Germany). Under these tradenames interference pigments showing violet, red, green and blue colors are available on the market.

Preferred interference platelet-type pigments for use according to the present invention have a largest surface diameter preferably between 5 and 200 µm and more preferably of 25 µm to 30 µm. The thickness of the platelet-type interference pigments is preferably between 0.1 µm and 0.6 µm and more preferably between 0.2 µm and 0.4 µm.

In accordance with a preferred embodiment particularly good anti-copying security is obtained by means of an opaque document wherein said uniformly distributed interference pigments of a particular color are present in combination with a printed pattern containing interference pigments of a color different from the color of the uniformly distributed interference pigments when viewed under the angle of reflection under which photocopying could take place.

The "copying angle" is the angle, usually 90°, formed by the information-containing light rays and the copying material.

In accordance with another embodiment there is provided an opaque document wherein said uniformly distributed interference pigments are present in conjunction with different and pattern-wise printed interference pigments on a background having a color substantially the same as the color, e.g. yellow, reflected by said pattern-wise printed interference pigments under the angle of reflection under which photocopying could take place. Hereby the pattern of the pattern-wise printed interference pigments becomes undetectable against the image background for the copying machine, but is still visible in the document under a viewing angle different from the copying angle.

In accordance with a further embodiment there is provided an opaque document wherein said uniformly distributed interference pigments are present in combination with pattern-wise printed colored light absorbing substances (colored pigments or dyes), and/or white light-diffusing pigments.

The layer containing the uniformly distributed interference pigments may be applied by coating techniques operating with a coating liquid containing said pigments in dispersed form and a dissolved binding agent or containing said pigments dispersed together with a binding agent in the form of a latex. After coating the solvent or dispersing liquid, e.g. water, is removed by evaporation. Any coating technique for the application of thin liquid layers may be used as is known e.g. from the field of the manufacture of photographic silver halide emulsion layer materials, e.g. doctor blade coating, gravure roller coating, meniscus coating, air knife coating, slide hopper coating and spraying.

According to a special coating technique the interference pigments are applied in a radiation-curable binder or binder system wherein e.g. monomers act as solvent for polymers or prepolymers as described e.g. in published EP-A 0 522 609, so that after coating of the liquid coating composition no solvent has to be evaporated.

In accordance with a particular embodiment the uniformly distributed interference pigments are applied in a layer that is transferred by a stripping-off procedure to built the document of the present invention. Such procedure is described in published EP-A 0 478 790 but is applied therein for controlling the whiteness of an image present on a permanent support using for the stripping-off and transfer procedure a temporary support coated with a wet-strippable non-photosensitive layer containing fluorescent whitening agent(s) in a hydrophilic colloid binder.

According to a special embodiment the interference pigments applied in the form of a pigment-transfer-foil wherefrom by hot transfer the pigments are transferred uniformly onto the substrate of the security document.

Still another coating technique suited for uniformly applying said pigments is by dry powder-spraying optionally on a hot-melt resin layer wherein they are impregnated by pressure and heat. On top of the pigments an adhesive, e.g. wax may be applied to improve adherence to the selected substrate. That substrate may have hydrophilic or hydrophobic surface properties.

Spray-coating may be applied for covering the whole surface of the substrate or only a part thereof producing "light interference rainbow-effects". By using varying mixtures of different interference pigments the intensity of one color can be made to decrease gradually while an increasing color intensity of another pigment comes up. The human eye will see the rainbow effect varying according to the perception angle and will recognize the basic color of each of the sprayed pigments, but a photocopier operating with a fixed copying angle will only reproduce, say a single yellowish-brown color and not the colors of the interference pigments that can be seen under different inspection angles.

The interference pigments can be used for pigmenting a commercial coating varnish which may then be used for pre-coating a security document substrate, e.g. opaque resin film or paper. The coating may proceed with common varnishing or impregnation machinery instead of using printing presses.

As already mentioned herein the uniformly applied interference pigments are advantageously combined with image-wise or pattern-wise interference pigments of another color.

The image-wise or pattern-wise application of interference pigments proceeds by printing with an ink containing said pigments. Suited printing processes are e.g. planographic offset printing, gravure printing, intaglio printing, screen printing, flexographic printing, relief printing, tampon printing, ink jet printing and toner-transfer printing from electro(photo)graphic recording materials.

For use in printing on hydrophilic layers or substrates the ink contains for example a 15 to 20 % by weight mixture of the interference pigments in a solution of cellulose nitrate in a polyethylene ether. Such ink has a good adherence on hydrophilic colloid layers such as gelatin-containing layers used in DTR-recording materials. Said ink is advantageously applied with a commercial screen press using a polyester screen with a 77 and 55 mesh. The interference colors gradually appear on drying the ink.

Thus applied ink patterns on a hydrophilic image-receiving layer for DTR-image production remain unchanged during DTR-processing.

The presence of the interference pigments in one of the layers of the opaque security document does not affect the possibility to print thereon further graphic or alpha-numerical information by any known printing technique.

For easy visual verification the interference pigments are present preferably in a coverage of 0.3 g/m² to 10 g/m² and more preferably in a coverage between 0.7 g/m² and 3 g/m² in the above mentioned silver-type DTR and dye diffusion transfer materials, either in the image-receiving layer itself and/or in a waterpermeable top layer and/or in a subbing layer covering the support.

The presence of a dried water-impermeable ink pattern on the image-receiving layer blocks DTR-image formation. Thereby it is possible to arrange e.g. fine line patterns such as guilloches in the photograph creating that way an additional security feature.

The printing of an interference pigment-containing pattern may proceed on a substrate already covered e.g. by a hologram, light-diffraction pattern, metallic pattern that can be viewed throught the printed pattern so that the properties of the interference pigments are added thereto.

The printed pattern containing interference pigments forms no obstacle for a good adherence with laminated plastic resinous covering material. By proper selection of the binder of the ink it can be co-melted with the resin material laminated thereto.

According to a particular embodiment the interference pigment-containing ink is applied on a temporary support, e.g. polystyrene support, wherefrom the ink layer can be stripped off and transferred to a permanent support, e.g. a glued and preprinted substrate of a security document. The ink layer, applied overall or pattern-wise, after leaving the temporary support covers underlying pre-printed data on the permanent support. For preventing fraudulent copying these data have the same color as the interference pigment layer when seen under the copying angle. Insufficient image contrast is available so that copying of the pre-printed data is no longer possible. By applying a dried interference pigment-containing ink layer that is translucent the underlying data can be visually inspected therethrough by altering the perception angle.

In accordance with the preceding embodiment a security document according to the present invention, e.g. serving as I.D. card, is preferably in the form of a laminate in which the information-containing layer(s) are sealed between protective resinous sheets. I.D. card laminates may be built up as described e.g. in US-P 4,101,701, US-P 4,762,759, US-P 4,902,593, published EP-A 0 348 310 and published EP-A 0 462 330. By lamination tamper-proof documents are produced which do not allow the opening of the laminate without damaging the image contained therein. The destruction of the seal will leave visual fraude traces on the security document.

In accordance with a first mode in the opaque security document according to the present invention a black-and-white photograph in the form of a silver image is formed by the silver salt diffusion transfer process, called herein DTR-process. According to said process dissolved silver halide salt is transferred imagewise in a special image receiving layer, called development nuclei containing layer, for reducing therein transferred silver salt, said development nuclei containing layer contains itself and/or in an overlaying and/or an underlaying layer uniformly distributed therein said interference pigments.

The principles of the DTR-process are described in U.S. patent No. 2,352,014 of André Rott, issued June 20, 1944. According to said process silver complexes are image-wise transferred by diffusion from a silver halide emulsion layer to an image-receiving layer, where they are converted, in the presence of development nuclei, into a silver image. For this purpose, an image-wise exposed silver halide emulsion layer is developed by means of a developing substance in the presence of a so-called silver halide solvent. In the exposed parts of the silver halide emulsion layer the silver halide is developed to metallic silver so that it cannot dissolve anymore and consequently cannot diffuse. In the non-exposed parts of the silver halide emulsion layer the silver halide is converted into soluble silver complexes by means of a silver halide complexing agent, acting as silver halide solvent, and said complexes are transferred by diffusion into an image-receiving layer being in waterpermeable contact with said emulsion layer to form by the catalytic action of said development nuclei, in so-called physical development, a silver-containing image in the image-receiving layer.

More details on the DTR-process can be found in "Photographic Silver Halide Diffusion Processes" by A. Rott and E. Weyde, Focal Press, London, New York (1972).

In accordance with a second mode in the opaque security document according to the present invention a color photograph in the form of one or more dye images is formed by the dye diffusion transfer process (dye DTR-process) wherein the image-wise transfer of dye(s) is controlled by the development of (a) photo-exposed silver halide emulsion layer(s), and wherein dye(s) is (are) transferred imagewise in a special image receiving layer, called mordant layer, for fixing the dyes, said mordant layer and/or an overlaying and/or an underlaying layer containing uniformly distributed therethrough said interference pigments.

Dye diffusion transfer reversal processes are based on the image-wise transfer of diffusible dye molecules from an image-wise exposed silver halide emulsion material into a waterpermeable image-receiving layer containing a mordant for the dye(s). The image-wise diffusion of the dye(s) is controlled by the development of one or more image-wise exposed silver halide emulsion layers, that for the production of a multicolor image are differently spectrally sensitized and contain respectively a yellow, magenta and cyan dye molecules. A survey of dye diffusion transfer imaging processes has been given by Christian C. Van de Sande in Angew. Chem. - Ed. Engl. 22 (1983) n° 3, 191-209 and a particularly useful process is described in US-P 4,496,645.

For use in dye diffusion transfer photography the type of mordant chosen will depend upon the dye to be mordanted. If acid dyes are to be mordanted, the image-receiving layer being a dye-mordanting layer contains basic polymeric mordants such as polymers of amino-guanidine derivatives of vinyl methyl ketone such as described in US-P 2,882,156, and basic polymeric mordants and derivatives, e.g. poly-4-vinylpyridine, the metho-p-toluene sulphonate of poly-2-vinylpyridine and similar compounds described in US-P 2,484,430, and the compounds described in the published DE-A 2,009,498 and 2,200,063. Other mordants are long-chain quaternary ammonium or phosphonium compounds or ternary sulphonium compounds, e.g. those described in US-P 3,271,147 and 3,271,148,, and cetyltrimethyl-ammonium bromide. Certain metal salts and their hydroxides that form sparingly soluble compounds with the acid dyes may be used too. The dye mordants are dispersed or molecularly divided in one of the usual hydrophilic binders in the image-receiving layer, e.g. in gelatin, polyvinylpyrrolidone or partly or completely hydrolysed cellulose esters.

In US-P 4,186,014 cationic polymeric mordants are described that are particularly suited for fixing anionic dyes, e.g. sulphinic acid salt dyes that are image-wise released by a redox-reaction described e.g. in in published EP-A 0,004,399 and US-P 4,232,107.

The DTR process can be utilized for reproducing line originals e.g. printed documents, as well as for reproducing continuous tone originals. e.g. portraits.

By the fact that the DTR-image is based on diffusion transfer of imaging ingredients the image-receiving layer and optionally present covering layer(s) have to be waterpermeable.

The reproduction of black-and-white continuous tone images by the DTR-process requires the use of a recording material capable of yielding images with considerable lower gradation than is normally applied in document reproduction to ensure the correct tone rendering of continuous tones of the original. In document reproduction silver halide emulsion materials are used which normally mainly contain silver chloride. Silver chloride not only leads to a more rapid development but also to high contrast.

In U.S. patent. No. 3,985,561, to be read in conjunction herewith, a light-sensitive silver halide material is described wherein the silver halide is predominantly chloride and this material is capable of forming a continuous tone image on or in an image-receiving material by the diffusion transfer process.

According to said U.S. patent a continuous tone image is produced by the diffusion transfer process in or on an image-receiving layer through the use of a light-sensitive layer which contains a mixture of silver chloride and silver iodide and/or silver bromide dispersed in a hydrophilic colloid binder e.g. gelatin, wherein the silver chloride is present in an amount of at least 90 mole % based on the total mole of silver halide and wherein the weight ratio of hydrophilic colloid to silver halide, expressed as silver nitrate, is between 3:1 and about 10:1 by weight.

With these light-sensitive materials successful reproduction of continuous tone images can be obtained probably as a result of the presence of the indicated amounts of silver iodide and/or silver bromide and of the defined high ratio of hydrophillic colloid to silver halide.

According to U.S. patent No. 4,242,436 likewise to be read in conjunction herewith, the reproduction of continuous tone images can be improved by developing the photographic material with a mixture of developing agents comprising an o-dihydroxybenzene, e.g. catechol, a 3-pyrazolidinone e.g. a 1-aryl-3-pyrazolidinone and optionally a p-dihydroxybenzene, e.g. hydroquinone, the molar amount of the o-dihydroxybenzene in said mixture being larger than the molar amount of the 3-pyrazolidinone, and the p-dihydroxybenzene if any being present in a molar ratio of at most 5 % with respect to the o-dihydroxybenzene.

Suitable development nuclei for use in the above mentioned physical development in the image receiving layer are e.g. noble metal nuclei e.g. silver, palladium, gold, platinum, sulphides, selenides or tellurides of heavy metals such as Pd, Ag, Ni and Co. Preferably used development nuclei are colloidal PdS, Ag₂S or mixed silver-nickelsulphide particles. The amount of nuclei used in the image receiving layer is preferably between 0.02 mg/m² and 10 mg/m².

The image receiving layer comprises for best imaging results the physical development nuclei in the presence of a protective hydrophilic colloid, e.g. gelatin and/or colloidal silica, polyvinyl alcohol etc..

The transfer behaviour of the complexed silver largely depends on the thickness of the image-receiving layer and the kind of binding agent or mixture of binding agents used in the nuclei containing layer. In order to obtain a sharp image with high spectral density the reduction of the silver salts diffusing into the image receiving layer must take place rapidly before lateral diffusion becomes substantial. An image-receiving material satisfying said purpose is described in US-P 4,859,566.

An image-receiving material of this type is very suitable for use in connection with the present invention and contains a water-impermeable support coated with (1) an image-receiving layer containing physical development nuclei and interference pigments dispersed in a waterpermeable binder and (2) a waterpermeable top layer free from development nuclei and containing a hydrophilic colloid, in such a way that :
(i) the total solids coverage of said two layers (1) and (2) is e.g. at most 2 g/m²,
(ii) in layer (1) the coverage of the nuclei is in the range of 0.1 mg/m² to 10 mg/m², and the coverage of binder is in the range of 0.4 to 1.5 g/m², and
(iii) in said top layer (2) the coverage of hydrophilic colloid is in the range of 0.1 to 0.9 g/m².

The coating of said layers proceeds preferably with slide hopper coater or curtain coater known to those skilled in the art.

According to a particular embodiment the nuclei containing layer (1) is present on a nuclei-free underlying hydrophilic colloid undercoat layer or undercoat layer system having a coverage in the range of 0.1 to 1 g/m² of hydrophilic colloid, the total solids coverage of layers (1) and (2) together with the undercoat being at most 2 g/m². In connection with this embodiment the nacreous pigments may be also be included in the undercoat layer or may be included therein instead of being present in the nuclei containing layer.

The undercoat optionally incorporates substances that improve the image quality, e.g. incorporates a substance improving the image-tone or the whiteness of the image background. For example, the undercoat may contain a fluorescent substance, silver complexing agent(s) and/or development inhibitor releasing compounds known for improving image sharpness.

According to a special embodiment the image-receiving layer (1) is applied on an undercoat playing the role of a timing layer in association with an acidic layer serving for the neutralization of alkali of the image-receiving layer. By the timing layer the time before neutralization occurs is established, at least in part, by the time it takes for the alkaline processing composition to penetrate through the timing layer. Materials suitable for neutralizing layers and timing layers are disclosed in Research Disclosure July 1974, item 12331 and July 1975, item 13525.

In the image-receiving layer (1) and/or in said top layer (2) and/or in an alkali-neutralizing undercoat gelatin is used preferably as hydrophilic colloid. In layer (1) gelatin is present preferably for at least 60 % by weight and is optionally used in conjunction with an other hydrophilic colloid, e.g. polyvinyl alcohol, cellulose derivatives, preferably carboxymethyl cellulose, dextran, gallactomannans, alginic acid derivatives, e.g. alginic acid sodium salt and/or watersoluble polyacrylamides. Said other hydrophilic colloid may be used also in the top layer for at most 10 % by weight and in the undercoat in an amount lower than the gelatin content.

The image-receiving layer and/or a hydrophilic colloid layer in water-permeable relationship therewith may comprise a silver halide developing agent and/or silver halide solvent, e.g. sodium thiosulphate in an amount of approximately 0.1 g to approximately 4 g per m².

The image-receiving layer or a hydrophilic colloid layer in water-permeable relationship therewith may comprise colloidal silica.

The image-receiving layer may contain as physical development accelerators, in operative contact with the developing nuclei, thioether compounds such as those described e.g. in DE-A-1,124,354; US-P 4,013,471; US-P 4,072,526 and in EP 26520.

According to a preferred embodiment the processing liquid and/or the DTR image-receiving material contains at least one image toning agent. In said case the image toning agent(s) may gradually transfer by diffusion from said image-receiving material into the processing liquid and keep therein the concentration of said agents almost steady. In practice such can be realized by using the silver image toning agents in a coverage in the range from 1 mg/m² to 20 mg/m² in a hydrophilic waterpermeable colloid layer.

A survey of suitable toning agents is given in the above mentioned book of André Rott and Edith Weyde, p. 61-65, preference being given to 1-phenyl-1H-tetrazole-5-thiol, also called 1-phenyl-5-mercapto-tetrazole, tautomeric structures and derivatives thereof such as 1-(2,3-dimethylphenyl)-5-mercapto-tetrazole,
1-(3,4-dimethylcyclohexyl)-5-mercapto-tetrazole,
1-(4-methylphenyl)-5-mercapto-tetrazole,
1-(3-chloro-4-methylphenyl)-5-mercapto-tetrazole,
1-(3,4-dichlorophenyl)-5-mercapto-tetrazole. Further particularly useful toning agents are of the class of thiohydantoins and of the class of phenyl substituted mercapto-triazoles. Still further toning agents suitable for use in accordance with the preferred embodiment of the present invention are the toning agents described in published European patent applications 218752, 208346, 218753 and US-P 4,683,189.

In the security documents according to the present invention the opaque support is e.g. an opaque paper support or resin coated paper supports, e.g. polyolefin coated paper and polyethylene coated paper of which the polyethylene layer may contain the interference pigments or other opacity providing pigments such as white TiO₂ particles as described e.g. in published European patent application (EP-A) 0 324 192. The opaque supports reflecting white light may contain optical brightening agents.

Other opaque supports that may be used are resin supports containing in their resin mass dispersed white pigments, e.g. TiO₂, or are such resin supports that contain said pigments dispersed in the resin mass in the presence of light-straying microvoids as described e.g. in EP 349152. Organic resins used for manufacturing said supports, e.g. by extrusion, are polycarbonate, polyester, preferably polyethylene terephthalate, polystyrene and homo- and copolymers of vinyl chloride. Further are mentioned cellulose esters e.g. cellulose triacetate.

The above mentioned DTR image-receiving materials may be used in conjunction with any type of photosensitive material containing a silver halide emulsion layer. For continuous tone reproduction the silver halide comprises preferably a mixture of silver chloride, and silver iodide and/or silver bromide, at least 90 mole % based on the total mole of the silver halide being silver chloride, and the ratio by weight of hydrophilic colloid to silver halide expressed as silver nitrate is between 3:1 and 10:1.

The binder for the silver halide emulsion layer and other optional layers contained on the imaging element is preferably gelatin. But instead of or together with gelatin, use can be made of one or more other natural and/or synthetic hydrophilic colloids, e.g. albumin, casein, zein, polyvinyl alcohol, alginic acids or salts thereof, cellulose derivatives such as carboxymethyl cellulose, modified gelatin, e.g. phthaloyl gelatin etc. The weight ratio in the silver halide emulsion layer of hydrophilic colloid binder to silver halide expressed as equivalent amount of silver nitrate to binder is e.g. in the range of 1:1 to 10:1, but preferably for continuous tone reproduction is between 3.5:1 and 6.7:1.

The silver halide emulsions may be coarse or fine grain and can be prepared by any of the well known procedures e.g. single jet emulsions, double jet emulsions such as Lippmann emulsions, ammoniacal emulsions, thiocyanate- or thioether-ripened emulsions such as those described in US-P 2,222,264, 3,320,069, and 3,271,157. Surface image emulsions may be used or internal image emulsions may be used such as those described in US-P 2,592,250, 3,206,313, and 3,447,927. If desired, mixtures of surface and internal image emulsions may be used as described in US-P 2,996,382.

The silver halide particles of the photographic emulsions may have a regular crystalline form such as cubic or octahedral form or they may have a transition form. Regular-grain emulsions are described e.g. in J. Photogr. Sci., Vol. 12, No. 5, Sept./Oct. 1964, pp. 242-251. The silver halide grains may also have an almost spherical form or they may have a tabular form (so-called T-grains), or may have composite crystal forms comprising a mixture of regular and irregular crystalline forms. The silver halide grains may have a multilayered structure having a core and shell of different halide composition. Besides having a differently composed core and shell the silver halide grains may comprise also different halide compositions and metal dopants inbetween.

The average size expressed as the average diameter of the silver halide grains may range from 0.2 to 1.2 um, preferably between 0.2µm and 0.8µm, and most preferably between 0.3µm and 0.6µm. The size distribution can be homodisperse or heterodispere. A homodisperse size distribution is obtained when 95 % of the grains have a size that does not deviate more than 30 % from the average grain size.

The emulsions can be chemically sensitized e.g. by adding sulphur-containing compounds during the chemical ripening stage e.g. allyl isothiocyanate, allyl thiourea, and sodium thiosulphate. Also reducing agents e.g. the tin compounds described in BE-A 493,464 and 568,687, and polyamines such as diethylene triamine or derivatives of aminomethane-sulphonic acid can be used as chemical sensitizers. Other suitable chemical sensitizers are noble metals and noble metal compounds such as gold, platinum, palladium, iridium, ruthenium and rhodium. This method of chemical sensitization has been described in the article of R.KOSLOWSKY, Z. Wiss. Photogr. Photophys.

### Photochem. 46, 65-72 (1951).

The emulsions can also be sensitized with polyalkylene oxide derivatives, e.g. with polyethylene oxide having a molecular weight of 1000 to 20,000, or with condensation products of alkylene oxides and aliphatic alcohols, glycols, cyclic dehydration products of hexitols, alkyl-substituted phenols, aliphatic carboxylic acids, aliphatic amines, aliphatic diamines and amides. The condensation products have a molecular weight of at least 700, preferably of more than 1000. It is also possible to combine these sensitizers with each other as described in BE-P 537,278 and GB-P 727,982.

The silver halide emulsion may be sensitized panchromatically to ensure reproduction of all colors of the visible part of the spectrum or it may be orthochromatically sensitized.

The spectral photosensitivity of the silver halide can be adjusted by proper spectral sensitization by means of the usual mono- or polymethine dyes such as acidic or basic cyanines, hemicyanines, oxonols, hemioxonols, styryl dyes or others, also tri- or polynuclear methine dyes e.g. rhodacyanines or neocyanines. Such spectral sensitizers have been described by e.g. F.M. HAMER in "The Cyanine Dyes and Related Compounds" (1964) Interscience Publishers, John Wiley & Sons, New York.

The silver halide emulsions may contain the usual stabilizers e.g. homopolar or salt-like compounds of mercury with aromatic or heterocyclic rings such as mercaptotriazoles, simple mercury salts, sulphonium mercury double salts and other mercury compounds. Other suitable stabilizers are azaindenes, preferably tetra- or penta-azaindenes, especially those substituted with hydroxy or amino groups. Compounds of this kind have been described by BIRR in Z. Wiss. Photogr. Photophys. Photochem. 47, 2-27 (1952). Other suitable stabilizers are i.a. heterocyclic mencapto compounds e.g. phenylmercaptotetrazole, quaternary benzothiazole derivatives, and benzotriazole.

A survey of photographic silver halide emulsions and their preparation is given in Research Disclosure December 1989, item 308119.

Processing of the image-wise exposed photographic silver halide emulsion layer proceeds whilst in contact with an image receiving material according to the invention and is accomplished using an alkaline processing liquid having a pH preferably between 9 and 13. The pH of the alkaline processing liquid may be established using various alkaline substances. Suitable alkaline substances are inorganic alkali e.g. sodium hydroxide, potassium carbonate or alkanolamines or mixtures thereof. Preferably used alkanolamines are tertiary alkanolamines e.g. those described in EP-A-397925, EP-A-397926, EP-A-397927, EP-A-398435 and US-P 4,632,896. A combination of alkanolamines having both a pkₐ above or below 9 or a combination of alkanolamines whereof at least one has a pkₐ above 9 and another having a pkₐ of 9 or less may also be used as disclosed in the Japanese patent applications laid open to the public numbers 73949/61, 73953/61, 169841/61, 212670/60, 73950/61, 73952/61, 102644/61, 226647/63, 229453/63, US-P-4,362,811, US-P 4,568,634 etc.. The concentration of these alkanolamines is preferably from 0.1 mol/l to 0.9 mol/l.

Suitable developing agents for the exposed silver halide are e.g. hydroquinone-type and 1-phenyl-3-pyrazolidone-type developing agents as well as p-monomethylaminophenol and derivatives thereof. Preferably used is a combination of a hydroquinone-type and 1-phenyl-3-pyrazolidone-type developing agent wherein the latter is preferably incorporated in one of the layers comprised on the support of the photographic material. A preferred class of 1-phenyl-3-pyrazolidone-type developing agents is disclosed in the published EP-A 449340.

According to a preferred embodiment for continuous tone reproduction a mixture of developing agents comprising an o-dihydroxybenzene, e.g. catechol, a 3-pyrazolidinone e.g. a 1-aryl-3-pyrazolidinone and optionally a p-dihydroxybenzene, e.g. hydroquinone the molar amount of the o-dihydroxybenzene in said mixture being larger than the molar amount of the 3-pyrazolidinone, and the p-dihydroxybenzene if any being present in a molar ratio of at most 5 % with respect to the o-dihydroxybenzene can be used. Other type of developing agents suitable for use in accordance with the present invention are reductones e.g. ascorbic acid derivatives.

The developing agent or a mixture of developing agents can be present in an alkaline processing solution, in the photographic material or the image receiving material. In case the developing agent or a mixture of developing agents is contained in the photographic material and/or image receiving material, the processing solution can be merely an aqueous alkaline solution that initiates and activates the development.

In the DTR process the photographic element is developed in the presence of a silver halide solvent. Preferably used silver halide solvents are water soluble thiosulphate compounds such as ammonium and sodium thiosulphate, or ammonium and alkali metal thiocyanates. Other useful silver halide solvents (or "complexing agents") are described in the book "The Theory of the Photographic Process" edited by T.H. James, 4th edition, p. 474-475 (1977), in particular sulphites and uracil. Further interesting silver halide complexing agents are cyclic imides, preferably combined with alkanolamines, as described in US-P 4,297,430 and US-P 4,355,090. 2-mercaptobenzoic acid derivatives are described as silver halide solvents in US-P 4,297,429, preferably combined with alkanolamines or with cyclic imides and alkanolamines. Dialkylmethylenedisulfones can also be used as silver halide solvent.

The silver halide solvent is preferably present in the processing solution but may also be present in one or more layers comprised on the support of the imaging element and/or receiving material. When the silver halide solvent is incorporated in the photographic material it may be incorporated as a silver halide solvent precursor as disclosed in e.g. Japanese published unexamined patent applications no. 15247/59 and 271345/63, US-P 4,693,955 and US-P 3,685,991.

The processing solution for use in the production of black-and-white photographs in opaque security documents according to the present invention may comprise other additives such as e.g. thickeners, preservatives, detergents e.g. acetylenic detergents such as SURFYNOL 104, SURFYNOL 465, SURFYNOL 440 etc. all available from Air Reduction Chemical Company, New York.

The DTR-process is normally carried out at a temperature in the range of 10°C to 35°C.

Further details about the black-and-white DTR process and also about the dye diffusion transfer process and image receiving materials used therein are described in Research Disclosure November 1976, item 15162.

The present invention will now be illustrated by the following examples without however limiting it thereto. All ratios, percentages and parts are by weight unless otherwise specified.

### EXAMPLE 1

### - Preparation of photographic element for use in the DTR process

A gelatino silver halide emulsion was prepared by slowly running with stirring an aqueous solution of 1 mole of silver nitrate per liter into a gelatine solution containing per mole of silver nitrate 41 g of gelatin, 1.2 mole of sodium chloride, 0.08 mole of potassium bromide and 0.01 mole of potassium iodide.

The temperature during precipitation and the subsequent ripening process lasting three hours was kept at 40°C.

Before cooling, shredding and washing 214 g of gelatin were added per mole of silver halide. The washed noodles were molten and another 476 g of gelatin were added per mole of silver halide during the chemical ripening. After ripening 285 g of gelatin in the form of a 20 % aqueous solution were added to the emulsion per mole of silver halide as well as hydroquinone in an amount such that after coating 0.9 g of hydroquinone were present per m² and 1-phenyl-4,4-dimethyl-3-pyrazolidinone in an amount such that 0.21 g thereof were present per m². The emulsion was coated at one side of a subbed water-resistant paper support consisting of a paper having a weight of 110 g/m² coated at both sides with a polyethylene stratum at a ratio of 20 g/m² per side.

The emulsion was coated in such a way that an amount of silver equivalent to 1.5 g of silver nitrate was applied per m². The amount of gelatin corresponding therewith is 8.93 g/m² since the gelatin to silver nitrate weight ratio was 5.97.

### - Preparation of image receiving material for use in the DTR process

One side of a paper support having a weight of 100 g/m² being coated at both sides with a polyethylene layer of 20 g/m² was coated after corona treatment at a dry coverage of 2.5 g/m² of gelatin and 1.3 g/m² of interference pigment from the following coating composition :

| | |
|---|---|
| carboxymethyl cellulose | 12 g |
| gelatin | 38.5 g |
| 3 % aqueous dispersion of colloidal Ag₂S.NiS nuclei | 14 ml |
| 4 % aqueous solution of formaldehyde | 12 ml |
| aqueous dispersion of blue PALIOSECURE type EC 1408 (tradename) containing 30 % of said blue pigment and 8 % of gelatin | 80 g |
| 12.5 % solution of saponine in ethanol/water (20/80) | 20 ml |

### - Printing of the image receiving material with pattern of interference pigment

In the area lateron to be DTR-processed to form therein a portrait of a person being owner of a passport, a guilloche pattern was gravure-printed using an ink having the following composition :

15 % dispersion of green PALIOSECURE type EC 1407 (tradename) in a cellulose nitrate solution in liquid polyethylene glycol ether.

The printed ink pattern was dried at the air.

### - Printing of the image receiving material with pattern of graphical and numerical information using a blue non-iridiscent ink

The printing of said information was carried out in the background area having a blue color due to the presence of said interference pigment PALIOSECURE type EC 1408 (tradename). The printing of the blue non-iridescent ink proceeded at such density that there was no visible contrast at 90° inspection angle (being also the usual copying angle) between the background and the thus printed area.

### DTR-image formation

The above defined photographic element was image-wise exposed in a reflex camera to obtain therein in the guilloche covered area a photograph (portrait) of the passport owner.

The photo-exposed element was pre-moistened with a processing liquid as defined hereinafter.

The contact time of the photo-exposed element with said liquid was 6 seconds before being pressed together with the image-receiving material as defined above. The transfer processor employed was a COPYPROOF (registered trade name of AGFA-GEVAERT N.V.) type CP 380. The transfer contact time was 30 seconds. In the image-receiving layer a positive black-and-white (silver image) portrait of the photographed person was obtained.

| - Composition of the processing liquid: | |
|---|---|
| hydroxyethyl cellulose | 1.0 g |
| Ethylenediaminetetraacetic acid tetrasodium salt | 2.0 g |
| Na₂SO₃ | 45.0 g |
| Na₂S₂O₃ | 14.0 g |
| KBr | 0.5 g |
| 1-Phenyl-5-mercapto-tetrazole | 0.1 g |
| 1-(3,4-Dichlorophenyl)-1H-tetrazole-5-thiol | 0.02 g |
| N-methyl-ethanolamine | 45.0 ml |
| N-methyl-diethanolamine | 30.0 ml |
| Water up to | 1 l |

When viewed under an angle of 90° in daylight the color of the non-printed area around the portrait was blue due the presence of uniformly distributed therein blue PALIOSECURE type EC 1408 (tradename) . In the portrait area containing green PALIOSECURE type EC 1407 (tradename) black silver was missing and the guilloche pattern had a bluish-green color.

When viewing the document under an angle less than 45° the background area containing blue PALIOSECURE type EC 1408 (tradename) changed to become yellowish. Under that angle the graphical information and numerical information printed with said blue non-iridescent ink became legible.

On copying the obtained document with a color copier (CANON CLC 500) the above defined color changes were not reproduced in the obtained print. The guilloche pattern covering the portrait area can hardly be seen in the obtained print, and the blue printed graphical information is not copied.

### EXAMPLE 2

### - Preparation of image-receiving element for use in dye diffusion transfer process

An opaque polyvinyl chloride sheet having a thickness of 0.200 mm was after corona treatment coated at one side with the following compositions for forming a subbing layer and mordanting layer respectively :

| 1. Subbing layer coating composition | |
|---|---|
| gelatin | 4 g |
| aqueous dispersion of blue PALIOSECURE type EC 1408 (tradename) containing 30 % of said blue pigment and 8 % of gelatin | 200 g |
| ingredient A 40 % solution dispersed in aqueous medium | 250 ml |
| 5 % solution of siloxane compound in ethanol | 125 ml |
| 12.5 % solution of saponine in ethanol/water 20/80 | 20 ml |

Ingredient A is a polyester-polyurethane having the same chemical composition as described in US-P 4,902,593, column 2, lines 64-68 and column 3, lines 1-8.

The coating composition was applied coated at a dry coverage of 0.4 g/m² of gelatin and 1.2 g.m² of interference pigment.

| 2. Coating composition of the mordanting layer | |
|---|---|
| gelatin | 20 g |
| mordant M (20 % solution) | 250 ml |
| saponine (12 %) and wetting agent W (5 %) in water | 32 ml |
| aqueous 4 % solution of formaldehyde | 10 ml |

Mordant M on the basis of an epoxidized cationic polymer has the same composition as described in US-P 4,902,593, column 7, lines 14-42.

The coating composition was applied at a dry coverage of 0.9 g/m² of gelatin.

The above defined image-receiving material was processed in combination with a photographic dye diffusion transfer material as described in the Example of U.S. Pat. No. 4,496,645, which material was exposed to reproduce thereon a portrait. The exposed material was kept for 1 minute in contact with the above defined image-receiving material after being led through a diffusion transfer apparatus COPYPROOF CP 38 (tradename of Agfa-Gevaert N.V. Belgium) having in its tray the following basic processing liquid :

| | |
|---|---|
| sodium hydroxide | 25 g |
| sodium orthophosphate | 25 g |
| cyclohexane dimethanol | 25 g |
| 2,2'-methylpropylpropane diol | 25 g |
| N-ethylbenzene-pyridinium chloride | 0.5 g |
| distilled water up to | 1000 ml |

After leaving the processing tray the image-receiving sheet was led through a second tray containing an aqueous 5 % solution of the already mentioned wetting agent W corresponding with the following formula : iso-nonyl-phenoxy-(CH₂-CH₂-O)₉-H and potassium iodide (ref. EP 0250657).

After drying the processed sheet material it was laminated as described in US-P 4,902,593 to obtain a sealed I.D. card.

### EXAMPLE 3

According to Example 3 the interference pigments were applied uniformly in a mordanting layer of an image-receiving material suited for use in a dye diffusion transfer process.

### - Preparation of the image-receiving element

An opaque polyvinyl chloride sheet having a thickness of 0.200 mm was after corona treatment coated at one side with the following compositions for forming a subbing layer and mordanting layer respectively :

| 1. Coating composition of the subbing layer | |
|---|---|
| gelatin | 20 g |
| ingredient A 40 % solution dispersed in aqueous medium | 250 ml |
| 5 % solution of siloxane compound in ethanol | 125 ml |
| 12.5 % solution of saponine in ethanol/water 20/80 | 20 ml |

The coating composition was applied coated at a dry coverage of 0.4 g/m² of gelatin.

| 2. Coating composition of the mordanting layer | |
|---|---|
| gelatin | 12 g |
| aqueous dispersion of blue PALIOSECURE type EC 1408 (tradename) containing 30 % of said blue pigment and 8 % of gelatin | 100 g |
| mordant M (20 % solution) | 250 ml |
| saponine (12 %) and wetting agent W (5 %) in water | 32 ml |
| aqueous 4 % solution of formaldehyde | 10 ml |

The coating composition was applied at a dry coverage of 0.9 g/m² of gelatin, and 1.3 g/m² of interference pigment.

### EXAMPLE 4

Example 3 was repeated with the difference that the interference pigments were applied uniformly in a gelatin top coat covering the mordanting layer. The dried top coat contained 0.5 g/m² of gelatin and 1.3 g/m² of interference pigment.

## Claims

1. A document containing a photograph obtained by the silver complex or dye diffusion transfer process in an image receiving layer containing light interference pigments uniformly distributed in said image receiving layer, and/or in a layer overlaying or underlying said image receiving layer, said layer(s) being present on an opaque support, characterised in that said interference pigments are composed of silicate platelets coated with either :
A) a first layer of highly refractive metal oxide, and
B) a second black layer essentially consisting of metallic iron, molybdenum and/or wolfram, or coated with :
A) a first layer of highly refractive metal oxide, and
B) a second black layer essentially consisting of carbon or metal, and
C) a third layer of highly refractive metal oxide.

2. Document according to claim 1, wherein in said document said uniformly distributed interference pigments of a particular color are present in combination with a printed pattern containing interference pigments of a color different from the color of the uniformly distributed interference pigments when viewed under the angle of reflection under which photocopying could take place.

3. Document according to claim 1 or 2, wherein in said document said uniformly distributed interference pigments are present in conjunction with different and pattern-wise printed interference pigments on a background having a color substantially the same as the color reflected by said pattern-wise printed interference pigments under the angle of reflection under which photocopying could take place.

4. Document according to any of claims 1 to 3, wherein in said document said uniformly distributed interference pigments are present in conjunction with uniformly or pattern-wise printed colorants (colored pigments or dyes), and/or white light-diffusing pigments.

5. Document according to any of claims 1 to 4, wherein said photograph is formed by the silver salt diffusion transfer process in an image-receiving layer comprising physical development nuclei.

6. Document according to any of claims 1 to 4, wherein said photograph is formed by a dye diffusion transfer process in an image-receiving layer containing a mordant for a dye transferred from an image-wise exposed and developed silver halide emulsion material.

7. Document according to any of claims 1 to 6, wherein said pigments in the form of platelets have a largest surface diameter between 5 and 200 µm.

8. Document according to any of claims 1 to 7, wherein the thickness of said interference pigments is between 0.1 µm and 0.6 µm.

9. Document according to any of the preceding claims, wherein said uniformly distributed interference pigments are present in said document in a coverage of 0.3 g/m² to 10 g/m².

## Patentansprüche

1. Ein Dokument, das ein gemäß dem Silberkomplex- oder Farbstoffdiffusionsübertragungsverfahren in einer Bildempfangsschicht erhaltenes Foto enthält, wobei das Dokument gleichmäßig in der Bildempfangsschicht und/oder in einer unter oder oben auf letzterer Schicht befindlichen Schicht verteilte Lichtinterferenzpigmente enthält und die Schicht(en) auf einem opaken Träger aufgetragen ist (sind), dadurch gekennzeichnet, daß die Interferenzpigmente aus Silikatplatten bestehen, die entweder mit :
A) einer ersten Schicht mit stark lichtbrechendem Metalloxid, und
B) einer zweiten schwarzen, wesentlich aus Metalleisen, Molybdän und/oder Wolfram bestehenden Schicht, oder mit :
A) einer ersten Schicht mit stark lichtbrechendem Metalloxid,
B) einer zweiten schwarzen, wesentlich aus Kohlenstoff oder Metall bestehenden Schicht, und
C) einer dritten Schicht mit stark lichtbrechendem Metalloxid,
beschichtet sind.

2. Dokument nach Anspruch 1, dadurch gekennzeichnet, daß das Dokument die gleichmäßig verteilten Interferenzpigmente einer bestimmten Farbe in Kombination mit einem gedruckten Muster mit Interferenzpigmenten, deren Farbe sich bei Beobachtung unter dem Reflexionswinkel, unter dem das Fotokopieren stattfinden würde, von der Farbe der gleichmäßig verteilten Interferenzpigmente unterscheidet, enthält.

3. Dokument nach Anspruch 1 oder 2, dadurch gekennzeichnet, daß das Dokument die gleichmäßig verteilten Interferenzpigmente in Kombination mit unterschiedlichen und mustermäßig gedruckten Interferenzpigmenten, deren Farbe wesentlich dieselbe Farbe ist wie die Farbe, die durch die mustermäßig gedruckten Interferenzpigmente unter dem Reflexionswinkel, unter dem das Fotokopieren stattfinden würde, reflektiert wird, enthält.

4. Dokument nach irgendeinem der Ansprüche 1 bis 3, dadurch gekennzeichnet, daß das Dokument die gleichmäßig verteilten Interferenzpigmente in Kombination mit gleichmäßig oder mustermäßig gedruckten Färbematerialien (gefärbten Pigmenten oder Farbstoffen) und/oder Weißlicht diffundierenden Pigmenten enthält.

5. Dokument nach irgendeinem der Ansprüche 1 bis 4, dadurch gekennzeichnet, daß das Foto gemäß dem Silbersalzdiffusions-Übertragungsverfahren in einer physikalische Entwicklungskeime enthaltenden Bildempfangsschicht erzeugt wird.

6. Dokument nach irgendeinem der Ansprüche 1 bis 4, dadurch gekennzeichnet, daß das Foto gemäß einem Farbstoffdiffusions-Übertragungsverfahren in einer ein Beizmittel für einen von einem bildmäßig belichteten und entwickelten Silberhalogenid-Emulsionsmaterial übertragenen Farbstoff enthaltenden Bildempfangsschicht erzeugt wird.

7. Dokument nach irgendeinem der Ansprüche 1 bis 6, dadurch gekennzeichnet, daß die Pigmente in Form von Platten mit einem maximalen Oberflächendurchmesser zwischen 5 und 200 µm vorliegen.

8. Dokument nach irgendeinem der Ansprüche 1 bis 7, dadurch gekennzeichnet, daß die Stärke der Interferenzpigmente zwischen 0,1 µm und 0,6 µm liegt.

9. Dokument nach irgendeinem der vorstehenden Ansprüche, dadurch gekennzeichnet, daß die gleichmäßig verteilten Interferenzpigmente in einem Verhältnis zwischen 0,3 g/m² und 10 g/m² im Dokument enthalten sind.

## Revendications

1. Un document contenant une photo obtenue par le procédé de transfert de complexe d'argent ou de colorant par diffusion dans une couche réceptrice d'image, ce document contenant des pigments d'interférence de lumière répartis uniformément dans la couche réceptrice d'image et/ou dans une couche appliquée sur ou au-dessous de la couche réceptrice d'image, cette (ces) couche(s) étant située(s) sur un support opaque, caractérisé en ce que les pigments d'interférence sont composés de plaquettes de silicate enrobées soit :
A) d'une première couche d'oxyde de métal ayant un indice de réfraction élevé, et
B) d'une seconde couche noire composée essentiellement de fer métallique, de molybdène et/ou de tungstène, soit :
A) d'une première couche d'oxyde de métal ayant un indice de réfraction élevé, et
B) d'une seconde couche noire composée essentiellement de carbone ou de métal, et
C) d'une troisième couche d'oxyde de métal ayant un indice de réfraction élevé.

2. Document selon la revendication 1, caractérisé en ce que, dans ce document, les pigments d'interférence uniformément répartis d'une certaine couleur sont présents en combinaison avec un modèle imprimé contenant des pigments d'interférence d'une couleur différant de la couleur des pigments d'interférence répartis uniformément en cas d'observation sous l'angle de réflexion sous lequel la photocopie pourrait avoir lieu.

3. Document selon la revendication 1 ou 2, caractérisé en ce que, dans ce document, les pigments d'interférence uniformément répartis sont présents en combinaison avec différents pigments d'interférence imprimés sous forme de modèle sur un fond dont la couleur est substantiellement la même que la couleur réfléchie par les pigments d'interférence imprimés sous forme de modèle sous l'angle de réflexion sous lequel la photocopie pourrait avoir lieu.

4. Document selon l'une quelconque des revendications 1 à 3, caractérisé en ce que, dans ce document, les pigments d'interférence répartis uniformément sont présents en combinaison avec des colorants (pigments ou colorants colorés) imprimés uniformément ou sous forme de modèle et/ou des pigments diffusant la lumière blanche.

5. Document selon l'une quelconque des revendications 1 à 4, caractérisé en ce que la photo est formée par le procédé de diffuson-transfert de sel d'argent dans une couche réceptrice d'image contenant des germes de développement physique.

6. Document selon l'une quelconque des revendications 1 à 4, caractérisé en ce que la photo est formée par un procédé de diffusion-transfert de colorant dans une couche réceptrice d'image contenant un mordant pour un colorant transféré depuis un matériau d'émulsion à l'halogénure d'argent exposé et développé sous forme d'image.

7. Document selon l'une quelconque des revendications 1 à 6, caractérisé en ce que les pigments sont présents sous forme de plaquettes ayant un diamètre superficiel maximal compris entre 5 et 200 µm.

8. Document selon l'une quelconque des revendications 1 à 7, caractérisé en ce que l'épaisseur des pigments d'interférence est comprise entre 0,1 µm et 0,3 µm.

9. Document selon l'une quelconque des revendications précédentes, caractérisé en ce que le document contient les pigments d'interférence répartis uniformément dans un rapport de 0,3 g/m² à 10 g/m².
